Europäisches Patentamt

European Patent Office

Office européen des brevets

(19)

(11) Numéro de publication : **0 037 762**
**B1**

(12)

# FASCICULE DE BREVET EUROPÉEN

(45) Date de publication du fascicule du brevet :
29.02.84

(21) Numéro de dépôt : **81400435.4**

(22) Date de dépôt : **20.03.81**

(51) Int. Cl.³ : **H 04 L   9/02**

(54) **Procédé et système de transmission de messages signés.**

(30) Priorité : **09.04.80 FR 8007912**

(43) Date de publication de la demande :
**14.10.81 Bulletin 81/41**

(45) Mention de la délivrance du brevet :
**29.02.84 Bulletin 84/09**

(84) Etats contractants désignés :
**CH DE FR LI SE**

(56) Documents cités :
**CH-A-   577 216**
**US-A- 3 291 908**
**CONFERENCE RECORD OF THE 11th ASILOMAR CONFERENCE ON CIRCUITS, SYSTEMS AND COMPUTERS, 7-9 novembre 1977 PCIFIC GROVE (US) 1978, NEW YORK M.E. HELLMAN: "Cryptographic protection of information in communication networks", pages 204-207**

(73) Titulaire : **COMPAGNIE INTERNATIONALE POUR L'INFORMATIQUE CII-HONEYWELL BULL (dite CII-HB)**
**94, avenue Gambetta**
**F-75020 Paris (FR)**

(72) Inventeur : **Mollier, Jean Henri**
**94, avenue Gambetta**
**F-75020 Paris (FR)**

(74) Mandataire : **Doireau, Marc**
**CII-Honeywell Bull Division Propriété Industrielle**
**94, avenue Gambetta Boîte Postale 33**
**F-75960 Paris cedex 20 (FR)**

## Procédé et système de transmission de messages signés

La présente invention concerne un procédé et un système de transmission de messages signés.

Elle concerne plus particulièrement les systèmes dans lesquels les messages sont transmis dans une forme codée binaire, mais aussi les autres formes de transmission. Ces messages sont chiffrés par l'intermédiaire de clés de chiffrement au moment de leur émission, puis déchiffrés pour être restitués sous leur forme d'origine en clair à la réception. Un tel système a été décrit dans la demande de brevet français publiée le 4.9.81 sous le n° 2 477 344 déposée au nom de la demanderesse.

Le système décrit dans cette demande fait usage de deux clés de chiffrement.

La première est une clé banale E transmise directement en clair de l'émetteur vers le récepteur, la deuxième est une clé propre R calculée à la fois par l'émetteur et le récepteur et qui est une fonction de la clé banale, d'une identité liée au message qui est transmis et d'un code secret mémorisé dans deux dispositifs situés l'un à l'émetteur et l'autre au récepteur. La clé propre, calculée au niveau de l'émetteur, est utilisée au chiffrement du message transmis et la clé propre calculée au niveau du récepteur, est utilisée pour déchiffrer le message chiffré transmis. Si la fonction de calcul utilisée côté émetteur et récepteur est la même et si le code secret S mémorisé à ces niveaux est le même, les clés propres calculées seront les mêmes. Dans ces conditions, il ne reste plus qu'à utiliser au niveau de l'émetteur et du récepteur, un opérateur permettant à la fois le chiffrement du message par la clé propre calculée à l'émission et son déchiffrement par la clé propre calculée à la réception. Ces opérations de chiffrement et de déchiffrement sont alors facilement réalisables à l'aide de circuits logiques du type combinatoires. Il est alors possible grâce au système décrit dans cette demande de modifier constamment les clés propres calculées dans l'émetteur et dans le récepteur par modification aléatoire dans le temps de la valeur de la clé banale.

Selon une autre caractéristique de ce système, le calcul de chacune des clés propres aux niveaux respectifs de l'émetteur et du récepteur est assuré pour chacun d'eux, par des moyens de traitement situés dans un objet portatif comportant également une mémoire et dans lesquels se trouve mémorisé le programme de calcul de la fonction de détermination de la clé propre en fonction du code secret S mémorisé dans ladite mémoire et du code d'identification $I_n$ lié au message. Ces objets portatifs sont mis chacun à la disposition des opérateurs devant transmettre et recevoir les messages.

Le système ne peut alors fonctionner que si les deux opérateurs ont des objets portatifs rigoureusement accordés ce qui revient à dire par exemple que l'organe de traitement doit être sollicité par le même programme et que la mémoire doit contenir le même code secret. Il va de soi qu'un fraudeur, ne disposant ni du programme ni du code secret, ne peut calculer la clé propre lui permettant de déchiffrer le message transmis. La tâche lui est rendue d'autant plus difficile que le système modifie à tout moment la clé banale de façon aléatoire.

Selon une autre caractéristique de ce système et pour accroître de façon quasi absolue sa sécurité, chaque objet portatif du système contient à l'intérieur de sa mémoire une table des codes d'identification liés aux messages que chaque personne aura le droit de transmettre et de recevoir.

Le code d'identification lié au message, contenu dans les mémoires des objets portatifs, est pointé par des générateurs d'adresses situés à la fois au niveau de l'émetteur et du récepteur. Ces générateurs d'adresses établissent la correspondance entre le code d'identification $I_n$ lié au message et l'adresse du code d'identification contenu dans la mémoire de l'objet portatif. La transmission du message ne s'effectue correctement que si le générateur d'adresse et les objets portatifs ont pu établir l'identité du code d'identification lié au message.

Le système décrit dans cette demande de brevet résout correctement les problèmes de transmission des messages chiffrés mais il est incomplet, au sens qu'il ne permet pas d'authentifier de façon certaine la personne qui a transmis les messages et ceci peut être une cause d'handicap pour l'utilisation de ce système dans certaines applications.

En effet, dans l'organisation sociale — commerciale ou privée — les conventions passées entre personnes morales ou physiques, peuvent être l'objet de contrats. L'une des parties contractante peut, si elle le désire, faire valoir de façon indiscutable le texte qui définit l'engagement contractuel. Le contrat est en effet susceptible d'être produit. Le contrat est constitué d'un texte et d'un certain nombre de signatures. La matérialité du document — document écrit — ne résout qu'un problème pratique de mise à disposition pour reconnaissance. La portée juridique du contrat est tout entière dans les informations correspondantes au texte et dans la validité des signatures associées. La transposition d'un texte en code binaire, sans perte d'information ne pose pas de difficultés. Par contre, pour la signature cette transposition n'est pas absolue, il y a perte d'informations et plus grave l'absence de lien entre le texte et la signature laisse la possibilité de combiner texte et signature d'origines différentes.

Pour pallier ces inconvénients il est déjà connu du document Conference Record of the 11th Asilomar Conference on circuits, systems and computers, 7-9 novembre 1977, Pacific Groove (US), 1978, pages 204-207, un système de transmission de messages signés qui lie de façon indissociable le texte du message à sa signature.

Selon l'invention, la signature élaborée doit être rigoureusement dépendante du message transmis, elle ne doit pas être accessible aux tiers et encore moins au destinataire qui en premier titre pourrait s'en servir pour signer des engagements en méconnaissant le consentement du véritable titulaire de la signature.

Il est important que la signature ne puisse être élaborée de façon frauduleuse par un tiers. Pour cela, l'invention prévoit de faire calculer la signature à l'intérieur d'un objet portatif amovible en fonction d'un paramètre secret pré-enregistré dans une mémoire de cet objet non lisible de l'extérieur.

Le système de l'invention doit donc posséder les caractéristiques suivantes :

1. L'élaboration de la signature doit être automatique.

2. Le destinataire doit pouvoir vérifier la signature à deux niveaux.

a) au niveau du système proprement dit, puisque le système tel que décrit dans la demande de brevet ci-dessus référencée établit un dialogue entre deux objets portatifs accordés qui conduit à la reconnaissance mutuelle des deux correspondants.

b) au niveau d'une instance qui personnalise les objets portatifs en leur insérant un code secret au moment de leurs délivrances à leurs titulaires. Si cette instance est seule habilitée à connaître l'ensemble des codes secrets J des objets portatifs qu'elle délivre aux personnes demanderesses et dont elle est par conséquent la dépositaire, elle pourra être consultée par tout destinataire qui souhaite vérifier le message signé qu'il a reçu.

Cette instance où sont déposés tous les paramètres J des cartes produites peut retrouver le jeu secret de tout émetteur qui a dû déclarer son identité au destinataire. Si cette identité est exacte le dépositaire retrouvera, à l'aide du message qui lui a été confié et du jeu secret associé à l'émetteur, la valeur numérique de la signature. En cas d'identité la signature pourra être certifiée.

3. La signature du message doit être une fonction du message. Une seule lettre changée dans le message enlève à l'ensemble, texte plus signature, sa cohérence sous-jacente ; de la même manière qu'une altération quelconque sur un message lors de sa transmission doit être détectée par le test de contrôle établi lors de l'émission, transmis à la suite du message et vérifiée à la réception (à l'aide de l'utilisation des codes de Hamming par exemple) afin de pouvoir constater la compatibilité entre message et test.

Pour des raisons pratiques d'exécution, le message sera le plus souvent découpé en plusieurs blocs, chaque bloc étant signé.

4. L'inaccessibilité aux tiers de la signature doit être garantie.

5. Le destinataire bien qu'il possède un objet portatif accordé à celui de l'émetteur qui lui envoie un message, ne pourra signer valablement les messages qu'il reçoit à la place de l'émetteur.

Cette condition sera réalisée à priori sans difficulté si le destinataire ne connaît pas le jeu secret J, propre à l'émetteur, qui lui permettrait de calculer la signature correcte et s'il ne dispose pas non plus de la carte de l'émetteur qui seule est susceptible de produire cette signature. Emetteur et destinataire n'auront en commun que le jeu secret s permettant la transposition de la clé banale en clé propre pour les opérations de chiffrement et déchiffrement.

Le procédé et le système de transmission de messages signés de l'invention permettent d'atteindre ces objectifs en toute sécurité.

Le procédé selon l'invention consiste à transmettre des messages signés entre un appareil émetteur et au moins un appareil récepteur reliés par un dispositif de voie de transmission du type consistant à faire élaborer au niveau de l'émetteur une signature SG en fonction du message M à transmettre et à associer ce message à la signature ainsi obtenue, avant transmission, caractérisé en ce qu'il consiste à élaborer la signature SG à partir d'un code secret préenregistré dans une mémoire d'un objet portatif accouplé à l'appareil émetteur et à calculer cette signature SG dans des circuits de traitement incorporés dans ledit objet portatif.

L'invention sera mieux comprise à l'aide de la description faite au regard des dessins qui va suivre.

La figure 1 représente l'organisation du système de transmission de messages signés selon l'invention.

La figure 2 est une représentation d'un des générateurs d'adresse de la figure 1.

La figure 3 est une représentation d'un des séquenceurs de la figure 1.

La figure 4 représente le circuit combinatoire utilisé dans les opérations de chiffrement et de déchiffrement.

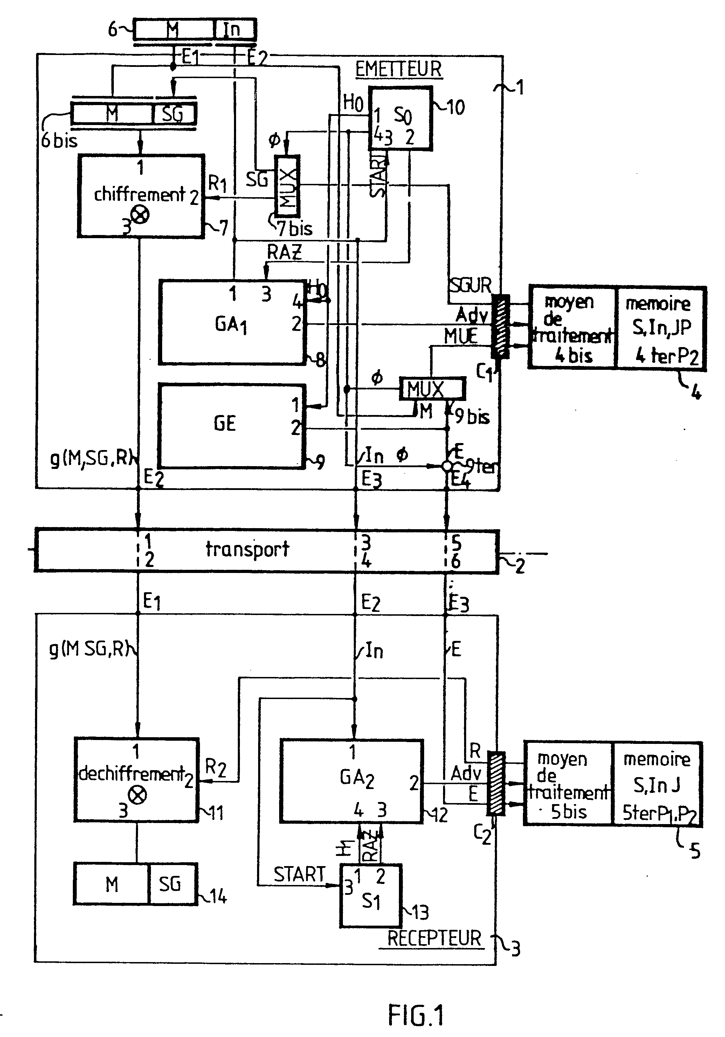

Le système représenté à la figure 1 se compose d'un émetteur 1 et d'un récepteur 3 reliés ensemble par un système de voie de transmission 2. L'émetteur 1 et le récepteur 3 peuvent être accouplés temporairement à des objets portatifs 4 et 5 comportant respectivement des moyens de traitement 4bis et 5bis ainsi que des dispositifs de mémorisation 4ter et 5ter. De tels objets portatifs sont décrits dans la demande de brevet française N° 77 26107 déposée au même nom que la demanderesse.

Les dispositifs de mémorisation des objets portatifs sont partagés en au moins cinq zones. La première est une zone secrète renfermant un code secret S qui est écrit au moment de l'initialisation de l'objet portatif. Le code secret ne peut dès lors être lu, que par l'organe de traitement de l'objet portatif lui-même et ne peut en aucun cas être lu par l'extérieur. La deuxième zone est une zone renfermant les codes d'identification $I_n$ liés aux messages que le porteur de l'objet est habilité à transmettre. La troisième zone renferme un programme $P_i$ dont la fonction est de calculer une clé propre R à partir des paramètres S, $I_n$ et de la clé banale E. Ce qui se résume par la

formule $R = P_1(S, I_n, E)$. La quatrième zone renferme le code secret J lié à la personne titulaire de l'objet portatif. La cinquième zone renferme un programme $P_2$ dont la fonction est de calculer la signature SG à partir des paramètres J, $I_n$ et du message M à transmettre selon la formule $SG = P_2(J, I_n, M)$. A chaque message du même signataire correspond ainsi une signature différente et deux messages identiques émis par des personnes différentes n'ont donc pas la même signature. Les programmes $P_1$ et $P_2$ une fois écrits ne sont pas modifiables et pourront être avantageusement contenus dans une mémoire morte du type ROM (abréviation du terme anglo-saxon Read Only Memory). L'écriture des codes d'identification en deuxième zone de mémoire pourra pour des raisons de sécurité être protégée par une clé standard inconnue du porteur de l'objet portatif. Les zones 4 et 5 ne sont pas utilisées lorsque l'objet portatif est utilisé en réception.

Le système de voie de transmission peut être pris quelconque parmi les systèmes de voie de transmission par câble électrique, optique, acoustique, magnétique ou liaison hertzienne.

L'émetteur 1 est constitué principalement d'un registre 6bis de concaténation du message M à transmettre et de sa signature SG, d'un dispositif 7 de chiffrement, d'un générateur d'adresse $GA_1$ 8, d'un générateur de codes aléatoires GE 9 et d'un séquenceur $S_0$ 10. La fonction de l'émetteur 1 est de transmettre le message M accompagné de son code d'identification $I_n$ présent dans le registre 6.

Le récepteur 2 est constitué par un dispositif 11 de déchiffrement, un générateur d'adresse $GA_2$ 12 et un séquenceur $S_1$ 13.

Les objets portatifs 4 et 5 peuvent être temporairement accouplés à l'émetteur 1 et au récepteur 3 par les moyens d'accouplement respectifs $C_1$ et $C_2$.

Le registre 6bis est relié au registre 6 de façon à pouvoir transférer le contenu du message M du registre 6 dans le registre 6bis.

Le dispositif de chiffrement 7 reçoit, sur son entrée 1 en provenance du registre 6bis le message en clair à chiffrer M associé à sa signature SG et sur son entrée 2 la clé propre de chiffrement $R_1$. Le message g (M, SG, R) chiffré par le dispositif 7 est transmis par ce dernier sur sa sortie 3 vers l'entrée 1 du dispositif de déchiffrement 11 par l'intermédiaire du système de voie de transmission 2. Le message G (M, SG, R) est alors déchiffré par le dispositif 11 par réception sur son entrée 2 de la clé propre $R_2$, le message accompagné de sa signature apparaît en clair sur sa sortie 3 et est figuré en 14.

La clé propre de chiffrement $R_1$ est délivrée et calculée par l'organe de traitement 4bis de l'objet portatif 4. De même, la clé propre de déchiffrement $R_2$ est délivrée et calculée par l'organe de traitement 5bis de l'objet portatif. Le générateur d'adresse $GA_1$ 8 calcule l'adresse du code d'identification du message située dans la mémoire 4ter de l'objet portatif 4 à partir du code d'identification $I_n$ lié au message en clair contenu dans le registre 6 et le transmet par sa sortie 2 sur le bus de données et d'adresse de l'objet portatif 4 (voir la demande de brevet 77 26107) au travers du moyen d'accouplement $C_1$. Le générateur d'adresse est remis dans un état initial par le signal RAZ transmis sur son entrée 3 par la sortie 2 du séquenceur $S_0$ 10, il est activé par les signaux d'horloge $H_0$ transmis sur son entrée 4 par la sortie 1 du séquenceur $S_0$ 10. Le séquenceur $S_0$ est commandé par le signal START dès qu'un message est transmis à l'entrée $E_2$ de l'émetteur 1. Le générateur de code aléatoire GE 9 délivre un signal aléatoire E sur plusieurs bits par action des signaux d'horloge $H_0$ émis par le séquenceur $S_0$ 10. Il peut être constitué par un simple compteur en anneaux. Ce code aléatoire est transmis par la sortie 2 du générateur 9 aux entrées respectives du multiplexeur 9bis et de l'objet portatif 5 par l'intermédiaire de la porte ET9ter. Le multiplexeur 9bis reçoit sur sa deuxième entrée le message M à transmettre en provenance du registre 6. Dans une variante de réalisation de l'invention, il sera possible d'envisager des réductions du champ de message M avant de l'appliquer à l'entrée du multiplexeur 9bis de façon à l'amener à un format utilisable par l'objet portatif 4. De la même manière que pour le générateur $GA_1$ 8 le générateur $GA_2$ 12 reçoit sur son entrée 1 le code d'identification $I_n$ (qui lui est transmis du registre 6 par l'intermédiaire du système de voie de transmission) pour calculer et délivrer sur sa sortie 2 l'adresse du code d'identification correspondant dans la mémoire 5ter de l'objet portatif 5. Ce générateur d'adresse est remis dans un état initial par le signal RAZ appliqué sur son entrée 3 par le séquenceur $S_1$ 13 et est activé par le signal d'horloge $H_1$ appliqué sur son entrée 4 par le séquenceur $S_1$. Le séquenceur $S_1$ est commandé sur son entrée 3 dès qu'un message est transmis par la voie de transmission 2.

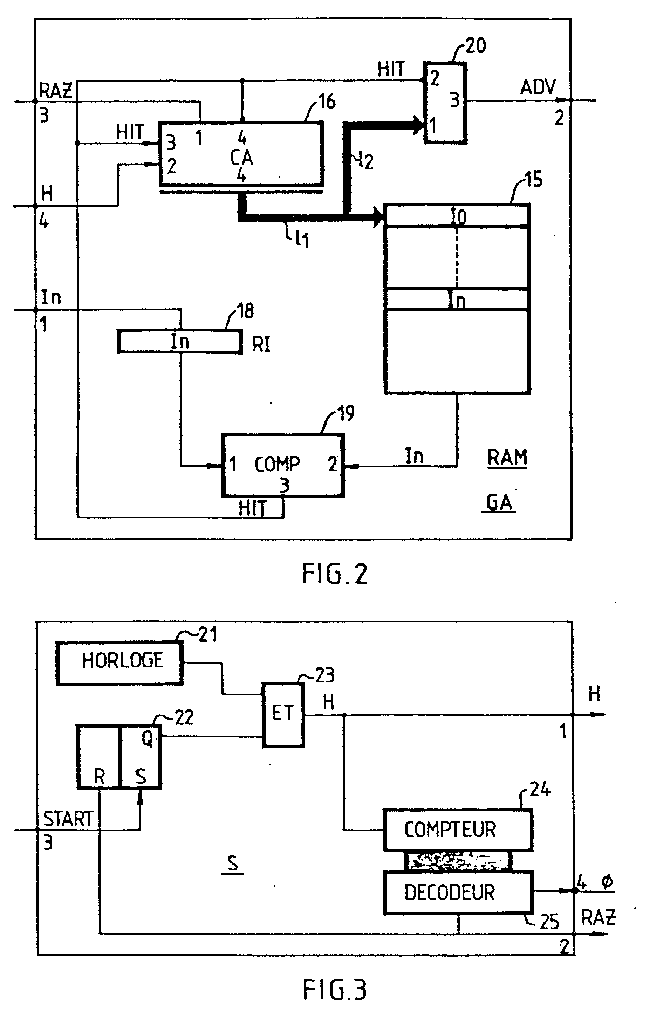

La réalisation d'un générateur d'adresse est représenté à la figure 2. Il comprend une mémoire 15 de type RAM (abréviation du terme anglo-saxon Random Access Memory) ou de type PROM ou EPROM (abréviation des termes anglo-saxons Programmable Read Only Memory et Erasable Read Only Memory). Cette mémoire contient une table de tous les codes d'identification $I_n$ des messages que le système est autorisé à transmettre. Cette mémoire est adressée à l'aide d'un compteur d'adresse CA 16. Ce compteur progresse à l'aide du signal d'horloge H présent sur l'entrée 4 du générateur d'adresse, il est remis à zéro par le signal RAZ présent sur l'entrée 3 du générateur d'adresse. Ce compteur détermine l'adresse du code d'identification $I_n$ contenu dans la mémoire de l'objet portatif et correspondant au message à transmettre. Cette détermination s'effectue à l'aide du registre d'identification RI 18 et du comparateur 19. Le code d'identification qui accompagne le message 6 à transmettre est introduit dans le registre RI 18, puis le compteur CA 16 progresse au rythme de l'horloge H, pour adresser et lire des mots d'identification contenus dans la mémoire 15. Les codes d'identification $I_n$ sont ainsi présentés successivement sur une entrée du comparateur 19 qui les compare au code d'identification contenu dans le registre 18.

Lorsqu'il y a identité dans la comparaison, le compteur d'adresse CA arrête sa progression par application du signal HIT sur son entrée 4 et délivré par la sortie 3 du comparateur 14. Simultanément, le contenu du compteur CA 16 qui représente l'adresse où se trouve dans l'objet portatif le code d'identification $I_n$ du message à transmettre, est transmis par l'intermédiaire de la porte 20 commandée sur son entrée 1 par le signal HIT, sur la sortie du générateur d'adresse. Un exemple de réalisation d'un séquenceur S est montré à la figure 3. Il comprend une horloge 21, un basculeur 22, une porte ET 23, un compteur 24 et un décodeur 25. Une entrée de la porte 23 reçoit les signaux d'horloge en provenance de l'horloge 21 ces signaux sont retransmis à sa sortie en direction de la sortie 1 du séquenceur lorsque l'autre entrée de la porte 23 est commandée par la sortie Q du basculeur 22. La sortie Q du basculeur 22 prend un état logique 1 lorsqu'il est commandé sur son entrée S par le signal START appliqué sur l'entrée 3 du séquenceur. Ce signal START peut être constitué par l'état présent d'un bit particulier accompagnant le message 6 à transmettre. Le signal H est transmis à l'entrée du compteur en anneau 24 dont un état particulier est décodé par le décodeur 25 pour commander les multiplexeurs 7bis et 9bis et la porte 9ter de l'émetteur et un autre état est décodé par le décodeur 25 de façon à remettre dans l'état zéro le basculeur 22 et délivrer le signal de RAZ sur la sortie 2 du séquenceur.

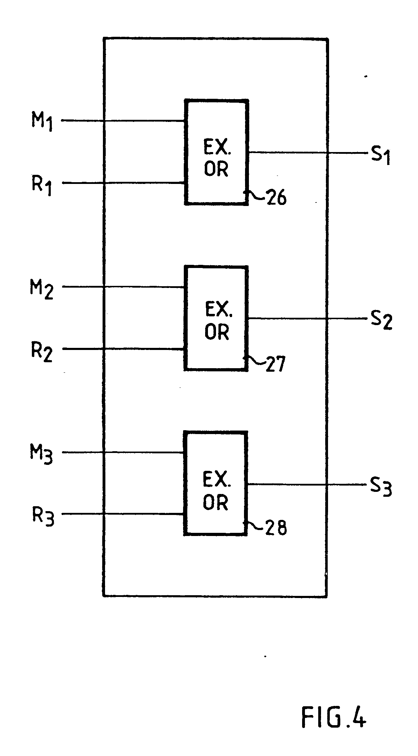

La figure 4 représente le circuit combinatoire utilisé à la fois pour réaliser les dispositifs de chiffrement et de déchiffrement 7 et 11 de la figure 1. Ce circuit est réalisé à base de circuits du type OU exclusif. A l'émission, un bit $M_i$ du message à transmettre (ou $SG_i$ de la signature) et un bit $R_i$ de la clé propre sont appliqués respectivement sur une entrée d'un circuit ou exclusif de façon que la combinaison résultante vérifie l'équation logique $S_i = M_i$ ou excl $R_i$ ou $S_i = G_i$ ou Ecl $R_i$. A la réception, le déchiffrement a lieu en utilisant également un circuit OU exclusif en appliquant sur deux de ses entrées les signaux $S_i$ et $R_i$ de façon à restituer les bits $M_i$ ou $SG_i$. L'exemple de la figure 4 montre une réalisation d'un circuit de chiffrement pour un message et un mot clé de trois bits. Les circuits 26 à 34 délivrent les signaux $S_1$ à $S_3$ de sorte que :

$$S_1 = M_1 \text{ ou excl } R_1$$
$$S_2 = M_2 \text{ ou excl } R_2$$
$$S_3 = M_3 \text{ ou excl } R_3$$

Le fonctionnement du système de transmission de messages signés selon l'invention est le suivant.

L'apparition du message en clair sur les entrées $E_1$ et $E_2$ de l'émetteur 1 provoque le déclenchement des générateurs d'adresse $GA_1$ et $GA_2$ de l'émetteur et du récepteur ainsi que du générateur de code aléatoire ou de clé banale GE. L'identité du message est reconnue par les générateurs d'adresses $GA_1$ et $GA_2$ qui transmettent alors l'adresse du code d'identité $I_n$ correspondant dans les objets portatifs 4 et 5.

Le multiplexeur 9bis transmet le message M aux moyens de traitement de l'objet portatif 4. La signature SG est alors calculée par les moyens de traitement de l'objet portatif 4 suivant l'équation $SG = P_2(M, I_n, J)$. Le résultat SG est alors transmis au travers du multiplexeur 7bis dans le registre 6bis où le message M à transmettre et la signature SG se trouvent concaténés. A l'apparition du signal délivré par le séquenceur $S_0$ le code aléatoire E (clé banale) est à son tour transmis à l'objet portatif 4 et au récepteur 3. Les clés propres $R_1$ et $R_2$ sont alors calculées par les moyens de traitement de chacun des objets portatifs à l'aide des équations $R_x = P_1(E, S, I_n)$. Si les objets portatifs sont de même nature, c'est-à-dire s'ils contiennent chacun le même programme $P_1$, le même code secret S et le même code d'identification $I_n$, les clés propres $R_1$ et $R_2$ se trouvent être les mêmes, la clé propre $R_1$ est appliquée au dispositif de chiffrement 7 alors que la clé $R_2$ est appliquée au dispositif de déchiffrement 11, le message reçu en 14 est alors identique au message en clair M transmis 6 et il comporte en plus sa signature.

L'exemple qui vient d'être donné d'une réalisation préférée de l'invention n'est nullement limitatif, il sera en effet possible de concevoir des variantes d'exécution de l'invention sans pour autant sortir de son cadre. En effet, selon le même principe, il sera loisible de réaliser un système permettant de transmettre des messages cosignés. Ce sera le cas où le message impliquera un engagement mutuel, émetteur et destinataire souhaitant être détenteur du texte revêtu de la signature de l'autre partie. Pour ce faire, l'émetteur demandera au destinataire de réémettre avec sa signature les blocs de messages qu'il reçoit au fur et à mesure.

De même, il sera toujours possible de fournir à l'émetteur un message attestant la réception d'informations signées, le destinataire devra regrouper dans un message retour la ou les signatures associées aux informations reçues et y appliquer sa propre signature. Ce message sera un accusé de réception probant car seul l'émetteur est capable de produire les signatures associées au message d'émission et seul le destinataire peut signer l'accusé de réception.

**Revendications**

1. Procédé de transmission de messages signés entre un appareil émetteur (1) et au moins un appareil récepteur (3) reliés par un dispositif de voie de transmission (2), du type consistant à faire élaborer au niveau de l'émetteur une signature (SG) en fonction du message M à transmettre et à associer ce message à la signature ainsi obtenue, avant transmission, caractérisé en ce qu'il consiste à élaborer la signature (SG) à partir d'un code secret (J) préenregistré dans une mémoire (4ter) d'un objet portatif (4) accouplé à l'appareil émetteur (1), et à calculer cette signature (SG) dans des circuits de traitement (4bis) incorporés dans ledit objet portatif (4).

2. Procédé selon la revendication 1, caractérisé en ce qu'il consiste une fois que le message M à transmettre est associé à sa signature (SG), à faire émettre par l'émetteur (1) une clé banale (E) à destination du récepteur et à faire calculer par l'émetteur (1) une clé propre (R₁) pour chiffrer le message (M) lié à sa signature (SG) à transmettre et par le récepteur (3) une clé propre (R₂) pour déchiffrer au niveau du récepteur le message (M) et la signature (SG) chiffrés.

3. Procédé selon la revendication 1 ou 2, caractérisé en ce que le lien du message (M) avec sa signature (SG) est obtenu au niveau de l'émetteur (1) par concaténation du message (M) à transmettre avec la signature (SG).

4. Système pour la transmission de messages signés entre un appareil émetteur (1) et un appareil récepteur (3) reliés entre eux par un dispositif de voie de transmission (2), caractérisé en ce qu'il comprend un objet portatif (4) amovible accouplé à l'appareil émetteur (1) et comprenant une mémoire (4ter) et des circuits de traitement (4bis), ladite mémoire (4ter) contenant au moins un code secret (J) et un programme de calcul d'une signature (SG) fonction du message (M) à transmettre et du code secret (J), ladite signature (SG) étant calculée par lesdits circuits de traitement (4bis) ; et un registre (6bis) pour stocker le message (M) et sa signature (SG) avant transmission vers l'appareil récepteur (3).

5. Système selon la revendication 4, caractérisé en ce que le registre (6bis) est relié à un dispositif de chiffrement (7) pour chiffrer avant transmission le message (M) et sa signature (SG) avec une clé (R₁), et en ce que l'appareil émetteur (1) comprend un générateur (9) de nombres aléatoires (E) qui transmet un nombre aléatoire (E) aux circuits de traitement (4bis) de l'objet portatif (4) pour calculer la clé de chiffrement (R₁) à partir de ce nombre aléatoire (E) et d'au moins un paramètre secret (J) préenregistré dans la mémoire (4ter) de l'objet portatif (4).

6. Système selon la revendication 5, caractérisé en ce que l'appareil récepteur (3) comprend des circuits de déchiffrement (11) du message chiffré transmis à partir d'une clé de déchiffrement (R₂), et un objet portatif amovible (5) accouplé à l'appareil récepteur (3) et comprenant une mémoire (5ter) où est au moins enregistré le code secret (J), et des circuits de traitement (5bis) pour calculer la clé de déchiffrement (R₂) à partir du code secret (J) et du nombre aléatoire (E) transmis par l'appareil émetteur (1).

## Claims

1. Method of transmitting signed messages between a transmitter apparatus (1) and at least one receiver apparatus (3), connected by means of a transmission channel device (2), of the kind consisting in elaborating a signature (SG) at the level of the transmitter as a function of the message M which is to be transmitted and in associating this message with the signature thus obtained, before transmission, characterised in that it consists in generating the signature (SG) from a secret code (J) prerecorded in a memory (4ter) of a portable object (4) coupled to the transmitter apparatus (1) and in calculating this signature in processing circuits (4bis) incorporated in the said portable object.

2. Method according to claim 1, characterised in that it consists, once the message M which is to be transmitted has been associated with its signature (SG) in causing the transmitter (1) to transmit a common key (E) to the receiver and in causing the transmitter (1) to calculate a suitable key (R₁) for coding the message (M) coupled with its signature (SG) to be transmitted, and causing the receiver (3) to calculate a key (R₂) able to redecode the coded message (M) and signature (SG) at the level of the receiver.

3. Method according to claim 1 or 2, characterised in that the linkage between the message (M) and its signature (SG) is obtained at the level of the transmitter (1) by concatenation with the signature (SG) of the message which is to be transmitted.

4. System for the transmission of signed messages between a transmitter apparatus (1) and a receiver apparatus (3) interconnected by means of a transmission channel device (2), characterised in that it comprises a removable portable object (4) coupled to the transmitter apparatus (1) and comprising a memory (4ter) and processing circuits (4bis), the said memory (4ter) containing at least one secret code (J) and a program for calculation of a signature (SG) as a function of the message (M) to be transmitted and of the secret code (J), the said signature (SG) being calculated by the said processing circuits (4bis) ; and a register (6bis) for storing the message (M) and its signature (SG) prior to transmission towards the receiver device (3).

5. System according to claim 4, characterised in that the register (6bis) is connected to a coding device (7) for coding of the message (M) and of its signature (SG) prior to transmission by means of a key (R₁) and in that the transmitter apparatus (1) comprises a generator (9) of random numbers (E) which transmits a random number (E) to the processing circuits (4bis) of the portable object (4) to calculate the code key (R₁) from this random number (E) and from at least one secret parameter (J) prerecorded in the memory (4ter) of the portable object (4).

6. System according to claim 5, characterised in that the receiver apparatus (3) comprises circuits (11) for decoding the coded message transmitted on the basis of a decoding key (R₂), and a removable protable object (5) coupled to the receiver device (3) and comprising a memory (5ter) in which at least the secret code (J) is recorded, and processing circuits (5bis) for calculating the decoding key (R₂) from the secret code (J) and from the random number (E) transmitted by the transmitter apparatus (1).

## Ansprüche

1. Verfahren zur Übertragung von unterschriebenen Nachrichten zwischen einem Sendegerät (1) und wenigstens einem Empfangsgerät (3), die durch eine Übertragungskanalvorrichtung (2) miteinander verbunden sind, bei welchem in dem Sender eine Unterschrift (SG) in Abhängigkeit von der zu übertragenden Nachricht M hergestellt und diese Nachricht der so erhaltenen Unterschrift vor der Übertragung zugeordnet wird, dadurch gekennzeichnet, daß es darin besteht, die Unterschrift (SG) aus einem geheimen Code (J) zu bilden, der zuvor in einem Speicher (4ter) eines tragbaren Gegenstands (4) aufgezeichnet wurde, welcher an das Sendegerät (1) angekoppelt ist, und diese Unterschrift (SG) in Verarbeitungsschaltungen (4bis) zu berechnen, die in den genannten tragbaren Gegenstand (4) eingebaut sind.

2. Verfahren nach Anspruch 1, dadurch gekennzeichnet, daß es darin besteht, nach der Zuordnung der zu übertragenden Nachricht M zu ihrer Unterschrift (SG) mittels des Senders (1) einen einfachen Schlüssel (E) zu dem Empfänger auszusenden und durch den Sender (1) einen individuellen Schlüssel (R₁) zum Verschlüsseln der Nachricht (M) zu berechnen, der mit ihrer zu übertragenden Unterschrift (SG) in Beziehung steht, sowie durch den Empfänger (3) einen individuellen Schlüssel (R₂) zu berechnen, um die verschlüsselte Nachricht (M) und Unterschrift (SG) im Empfänger zu entschlüsseln.

3. Verfahren nach Anspruch 1 oder 2, dadurch gekennzeichnet, daß die Beziehung der Nachricht (M) mit der Unterschrift (SG) im Sender (1) durch Verkettung der zu übertragenden Nachricht (M) mit der Unterschrift (SG) erhalten wird.

4. System zur Übertragung von unterschriebenen Nachrichten zwischen einem Sendegerät (1) und einem Empfangsgerät (3), die untereinander durch eine Übertragungskanalvorrichtung (2) verbunden sind, dadurch gekennzeichnet, daß es einen tragbaren, entfernbaren Gegenstand (4) umfaßt, der an das Sendegerät (1) angekoppelt ist und einen Speicher (4ter) sowie Verarbeitungsschaltungen (4bis) enthält, wobei der Speicher (4ter) wenigstens einen geheimen Code (J) und ein Rechenprogramm zur Berechnung einer Unterschrift (SG) enthält, die abhängt von der zu übertragenden Nachricht (M) und von dem geheimen Code (J), und wobei die Unterschrift (SG) durch die genannten Verarbeitungsschaltungen (4bis) berechnet wird ; und ein Register (6bis) umfaßt, um die Nachricht (M) und ihre Unterschrift (SG) vor der Übertragung zu dem Empfangsgerät (3) zu speichern.

5. System nach Anspruch 4, dadurch gekennzeichnet, daß das Register (6bis) mit einer Verschlüsselungsvorrichtung (7) verbunden ist, um vor der Übertragung die Nachricht (M) und ihre Unterschrift (SG) mittels eines Schlüssels (R₁) zu verschlüsseln, und daß das Sendegerät (1) einen Generator (9) für Zufallszahlen (E) umfaßt, welcher eine zufällige Zahl (E) den Verarbeitungsschaltungen (4bis) des tragbaren Gegenstandes (4) zuführt, um den für die Verschlüsselung verwendeten Schlüssel (R₁) aus dieser zufälligen Zahl (E) und wenigstens einem geheimen Parameter (J) zu berechnen, der zuvor in dem Speicher (4ter) des tragbaren Gegenstands (4) aufgezeichnet wurde.

6. System nach Anspruch 5, dadurch gekennzeichnet, daß das Empfangsgerät (3) Entschlüsselungsschaltungen (11) zur Entschlüsselung der übertragenen verschlüsselten Nachricht mittels eines Entschlüsselungs-Schlüssels (R₂) sowie einen tragbaren entfernbaren Gegenstand (5) umfaßt, der an das Empfangsgerät (3) angekoppelt ist und einen Speicher (5ter) umfaßt, in dem wenigstens der geheime Code (J) gespeichert ist, sowie Verarbeitungsschaltungen (5bis) enthält, um den Entschlüsselungs-Schlüssel (R₂) aus dem geheimen Code (J) und der durch das Sendegerät (1) übertragenen Zufallszahl (E) zu berechnen.

FIG.1

FIG.2

FIG.3

FIG.4